# EUROPEAN PATENT APPLICATION

(11) **EP 1 166 874 A1**
(43) Date of publication of application: **02.01.2002**
(21) Application number: 01305508.2
(22) Date of filing: 26.06.2001
(51) Int. Cl.: B02C 13/20, B07B 7/083

(54) **Separation device for unburned carbon in fly ash and separation method.**

(30) Priority: 26.06.2000 JP 2000190874; 13.04.2001 JP 2001114758
(71) Applicant: Nikkiso Company Limited, Tokyo (JP)
(72) Inventor: Toda, Yasuhiro, Shizuoka-shi, Shizuoka-ken (JP); Kojima, Sadatoshi, Shibuya-ku, Tokyo (JP); Yamamoto, Takeshi, c/o Abiko Research Laboratory, Abiko-shi, Chiba-ken (JP)
(74) Representative: Smith, Norman Ian

(57) **Abstract**

A separation device includes a casing (2), a first rotation blade (3) and a second rotation blade (4). A pulverization chamber (5) is defined between the casing and the first and second rotation blades. Operating an urging device (9) and at least one of the first and second rotation blades (3, 4) creates channeling vortices within the pulverization chamber. Fly ash containing unburned carbon is fed into the pulverization chamber (5), and through at least repeated self-collision, unburned carbon is segregated and reduced in size while the remaining particular matter is similarly segregated and reduced in size. A method implements the separation device and provides simple results.

## Description

The present invention relates to a device for separating unburned carbon in fly ash and a separation method for the same. In particular, the present invention pertains to a device that lowers the unburned carbon content in aggregated fly ash particles by separating the particles and refining the particles into smaller sizes for later use.

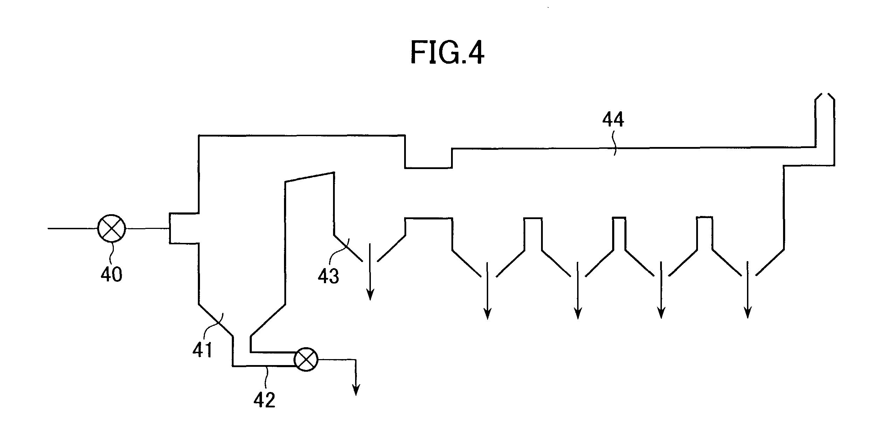

Referring now to Figure 4, in a coal fired power plant (not shown), coal is pulverized in a pulverizing device 40 to an average particle size of roughly 15-40 µm. The coal is then mixed with air at an entrance to a boiler (not shown), where it is burned inside a combustion chamber 41 linked to the pulverization device 40. In addition to the carbon content in the coal (fuel), there is approximately 5-30 weight % of ash material. Typically, the ash material is not burned in the above process but is discharged as an undesirable waste product called coal ash at multiple process positions, as will be described.

The components of the discharged coal ash are approximately 40-60 weight % of silicon oxide, 20-30 weight % of aluminum oxide, 5-10 weight % of calcium oxide, 3-8 weight % of iron oxide, 2-10 weight % of unburned carbon, and the remainder of minor particles. Depending on the origin of the coal used, the discharged coal ash may be alternatively classified as clinker ash, cinder ash, or fly ash. The components of each substance vary slightly due to the original composition and processing.

Clinker ash is collected from a boiler furnace bottom part 42 that is positioned below the combustion chamber 41, and is typified as a solid glass-type material. The clinker ash is thereafter pulverized and discharged in a conveniently handled size of approximately 0.5-1 mm (500-1000 µm). Clinker ash comprises approximately 10-20 weight % of the ash or coal ash waste.

Cinder ash is ash that falls into a fuel economizer 43 that is positioned downstream from the combustion chamber 41. The cinder ash is collected as spherical particles having an average particle size of 30-70 µm or as aggregates of these spherical particles. Cinder ash comprises approximately 5 weight % of the ash.

Fly ash is ash collected in an electric precipitator 44 that is positioned downstream from the fuel economizer 43. Fly ash is collected as spherical particles of average particle size 10-30 µm or as aggregates of the spherical particles. Fly ash comprises approximately 70-80 weight % of the ash.

Cinder ash and fly ash are liquefied in air during formation by the heat of combustion, and thereafter cooled to form typically spherical particles. These typically spherical particles of cinder ash and fly ash have an average particle size of 10-70 µm or may be formed as aggregates of these particles.

It should be understood from the above that unburned carbon typically adheres to the pseudo-spherical particles of the ash component or is mixed therein independently.

Unfortunately, a large amount of fly ash is discharged as undesirable waste in landfills, increasing costs, consuming space, and forming industrial waste.

Even where fly ash with a high content of unburned carbon is later used as a clay substitute material in cement, there is a limit to the amount that can be consumed in this manner. Ultimately, a large amount of fly ash must still be disposed of in landfills. Fly ash with a low content of unburned carbon and a small particle size may be used as an admixture for ready-mixed concrete, also within a useful limit. In sum, while there are some applications for the fly ash, the demand is insufficient for the supply, resulting in undesirable waste.

Even if new applications are developed, the particle size, color, and particularly the residual carbon amount and the variability of each of these items make their uniform efficient utilization both difficult and costly. Due to these variabilities, it is difficult to develop new applications for fly ash as a raw material. In sum, it is essential to reduce the unburned carbon content to a preferable and controllable range and to use the fly ash as a new raw material.

Many methods have been attempted to classify the unburned carbon content of ash, including sieve classification, electrostatic classification, wet classification, vibration classification and jet-mill classification. Each has an advantage and a disadvantage but none has been used in common practice or with great success.

Among these methods, a jet mill, in which classification is conducted after fly ash particles collide with each other and pulverized, has been gathering interest. Unfortunately, jet mills have multiple problems. These problems include complicated construction, difficult maintenance, and high costs, each serving as a barrier to implementation.

It is an object of the present invention to overcome the concerns listed above in a useful and inexpensive manner.

It is another object of the present invention to provide a separation device for unburned carbon that has a simple construction and can easily and effectively separate and remove unburned carbon in fly ash.

It is still another object of the present invention to provide a separation method employing the device.

It is yet another object of the present invention to provide an unburned carbon separation device and a separation method in which abrasion on apparatus is minimized, powder classification can be easily adjusted according to an input powder, and maintenance is easy and inexpensive.

Briefly stated, the present invention relates to a separation device that includes a casing, a first rotation blade and a second rotation blade. A pulverization chamber is defined between the casing and the first and second rotation blades. Operating a suction device and the first and second rotation blades creates channeling vortices within the pulverization chamber. Fly ash containing unburned carbon is fed into the pulverization chamber, and through repeated self-collision, unburned carbon is segregated and reduced in size while the remaining particular matter is similarly segregated and reduced in size. A method employs the device and provides simple separation and segregation.

According to the present invention there is provided a separation device comprising a casing that includes an inlet for receiving a first material containing at least an unburned carbon portion and a second portion, first means disposed in the casing for separating the first material into the unburned carbon portion and the second portion, the first means including second means for reducing in size the unburned carbon portion into a first reduced-size portion and the second portion into a second reduced-size portion, and segregation means for receiving the first reduced-size portion and the second reduced-size portion from the casing and segregating the first reduced-size portion from the second reduced-size portion for later use, whereby the separation device operates economically and effectively.

It is to be understood that untreated fly ash in fly ash is not solely but mainly a mixture of silicon oxide particles, aluminum oxide particles and unburned carbon particles.

According to another embodiment of the present invention, there is provided a separation device, wherein at least one of the first means, second means and segregation means is adjustable according to at least one of a size, density and unburned carbon content of the first material, whereby the separation device operates economically and accommodates material variation to the first material.

According to another embodiment of the present invention, there is provided a separation device further comprising a first rotation blade disposed in the first means and having a first rotation axis, a second rotation blade disposed in the first means and having a second rotation axis, the second rotation blade opposing the first rotation blade in the casing along a common axis of rotation, and a pulverization chamber defined between the casing and the first and second rotation blades.

According to another embodiment of the present invention, there is provided a separation device, wherein the pulverization chamber includes a first width defined as a separation between the first and the second rotation blades, and the first width is adjustable according to at least one of the size, density and unburned carbon content of the first material, whereby the separation device is adaptable according to variations in the first material.

According to another embodiment of the present invention, there is provided a separation device, wherein the first rotation blade includes a blade quantity and a first shape adapted to an inside surface of the casing, the second rotation blade includes a blade quantity and a second shape adapted to the inside surface of the casing, at least one of the first and second rotation blade is rotationally operable in at least one of an opposite direction and a same direction of at least the other of the first and second rotation blade, and the first and second rotation blades are rotationally operable according to the inside surface to create within the casing circulating vortices sufficient to cause the separation and the reduction in size of the first material by fracture impact and shear stress.

According to another embodiment of the present invention, there is provided a separation device further comprising a suction device and a connecting channel that connects the suction device to the casing, the suction device drawing a gas containing the first material into the inlet, over the first rotation blade, into the pulverization chamber, and over the second rotation blade to the segregation means to assist the vortices to transport the first material into the separation device for processing.

According to another embodiment of the present invention, there is provided a separation device further comprising at least one of a first outlet opening and a second outlet opening formed in the casing for receiving the first and second reduced-size portions from the casing and transferring the first and second reduced-size portions to the segregation means.

According to another embodiment of the present invention, there is provided a separation device further comprising a first storage part formed in the segregation means for receiving and segregating the first reduced-size portion depending upon a particle size and a mass of the first reduced-size portion, and a second storage part formed in the segregation means for receiving and segregating the second reduced-size portion depending upon a particle size and a mass of the second reduced-size portion, whereby the separation device provides easy separation of the unburned carbon from the second portion.

According to another embodiment of the present invention, there is provided a separation device, wherein the first outlet opening is disposed at a first position on the casing adjacent to the first rotation axis for receiving the first reduced-size portion, and the second outlet opening is disposed at a second position on the casing adjacent to an outer circumference of the second rotation blade for receiving the second reduced-size portion, whereby segregation of particle size and mass is simplified.

According to another embodiment of the present invention, there is provided a separation device, wherein the first inlet opening is disposed at a third position on the casing adjacent to an outer circumference of the first rotation blade.

According to another embodiment of the present invention, there is provided a separation device further comprising a classification device in the segregation means, and wherein the connecting channel connects the classification device to the casing, and the classification device receives discharged particles of the first and the second reduced-size portions and uses differences in mass and density of the discharged particles to classify them for later use.

According to another embodiment of the present invention, there is provided a method for separating unburned carbon in a first material containing both an unburned carbon portion and a second portion, comprising the steps of disposing a first rotation blade and a second rotation blade on opposing sides of a pulverization chamber along a common rotational centerline, rotating at least one of the first and second rotation blades about the common rotational centerline at at least one of a speed and a separation sufficient to create colliding vortices within the pulverization chamber, supplying the first material as particles into a bounding casing from a first position on the bounding casing and the unburned carbon portion having a first specific gravity lower than a second specific gravity of the second portion, separating the first material into the unburned carbon portion and the second portion through at least one of a first process of self-collision with other first material particles and a second process of equipment-collision with the bounding casing and the first and second rotation blades, reducing in size the unburned carbon portion and the second portion through repetition of at least one of the first and second processes, and segregating the reduced-in-size unburned carbon portion from the reduced-in-size second portion, whereby the method operates effectively with increased speed and efficiency.

According to another embodiment of the present invention, there is provided a method for separating unburned carbon in a first material containing both an unburned carbon portion and a second portion, further comprising the steps of receiving the reduced-in-size, segregated, unburned carbon portion in a first discharge opening on the bounding casing, and receiving the reduced-in-size, segregated second portion in a second discharge opening on the bounding casing, whereby the first material is efficiently and simply pulverized, reduced in size, and segregated for later use.

According to another embodiment of the present invention, there is provided a method for separating unburned carbon in a first material containing both an unburned carbon portion and a second portion, wherein the first position on the bounding casing surface is adjacent to an outer circumference of the first rotation blade, the first discharge opening is adjacent to a rotation center axis of the second rotation blade, whereby the unburned carbon particles having lower centrifugal force than the second portion are easier to separate, and the second discharge opening on the casing is adjacent to an outer perimeter portion of the second rotation blade, where the second portion having a higher centrifugal force than the unburned carbon portion is easier to separate.

According to another embodiment of the present invention, there is provided a method for separating unburned carbon in a first material containing both an unburned carbon portion and a second portion, comprising the steps of: supplying the first material in particulate form to a pulverization chamber in which a first rotation blade and a second rotation blade are disposed in an opposing manner along a single rotational axis on a first side adjacent to the first rotation blade, rotating at least one of the first and second rotation blades along the single rotational axis to provide colliding air vortices within the pulverization chamber, colliding particles of the first material on the colliding air vortices with each other to separate the unburned carbon portion from the second portion, pulverizing the unburned carbon portion and the second portion by repeated collision, segregating the separated, pulverized, unburned carbon portion and the second portion according to centrifugal force resulting from differences in mass, and separately capturing the now segregated, pulverized, unburned carbon portion and second portion to allow for later convenient use and discard.

According to another embodiment of the invention there is provided a separation device comprising a casing that includes an inlet for receiving a first material containing at least an unburned carbon portion into the casing, first means disposed in the casing for separating the first material into the unburned carbon portion and a second portion, the first means including second means for reducing in size the unburned carbon portion into a first reduced-size portion and the second portion into a second reduced-size portion, segregation means for receiving the first and second reduced-size portions from the casing and segregating the first reduced-size portion from the second reduced-size portion for later use, whereby the separation device operates economically and effectively, at least one of the first means, second means and segregation means being adjustable according to at least one of a size, density and unburned carbon content of the first material, whereby the separation device operates economically and accommodates material variation to the first material, a first rotation blade disposed in the first means and having a first rotation axis, a second rotation blade disposed in the first means and having a second rotation axis, the second rotation blade opposing the first rotation blade in the casing along a common axis of rotation, a pulverization chamber defined between the casing and the first and second rotation blades, the pulverization chamber including a first width defined as a separation between the first and second rotation blades, the first width being adjustable according to at least the size, density and unburned carbon content of the first material, whereby the separation device is adaptable according to variations in the first material, the first rotation blade including a blade quantity and a first shape adapted to an inside surface of the casing, the second rotation blade including a blade quantity and a second shape adapted to the inside surface of the casing, at least one of the first and second rotation blades being rotationally operable in at least one of an opposite direction and a same direction of the other of the first and second rotation blades, the first and second rotation blades being rotationally operable according to the inside surface to create within the casing circulating vortices sufficient to cause the separation and the reduction in size of the first material by fracture impact and shear stress, a suction device, a connecting channel that connects the suction device to the casing, the suction device drawing gas into the inlet, over the first rotation blade, into the pulverization chamber, and over the second rotation blade to the segregation means to assist the vortices to transport the first material into the separation device for processing, at least one of a first outlet opening and a second outlet opening formed in the casing for receiving the first reduced-size portion and the second reduced-size portion from the casing and transferring the first reduced-size portion and the second reduced-size portion to the segregation means, a first storage part formed in the segregation means, and a second storage part formed in the segregation means.

According to another embodiment of the invention there is provided a separation device comprising a casing, a first rotation blade and a second rotation blade disposed face to face inside the casing for operating about a common rotational axis, a pulverization chamber defined as a space bounded by the first and second rotation blades and the casing, an inlet opening formed in the casing adjacent to the first rotational blade and having a shape for receiving a particulate first material containing at least an unburned carbon portion and a second portion, at least one of a first discharge opening and a second discharge opening formed in the casing adjacent to the second rotational blade, the first discharge opening having a position adjacent to the common rotational axis of the second rotational blade and the second discharge opening having a position adjacent to an outer circumference of the second rotation blade, and a suction device connected to the casing opposite the first discharge opening and operating to draw the first particulate material into the casing.

According to another embodiment of the invention there is provided a separation device, wherein at least one of the first and second rotation blades is rotationally operable in at least one of an opposite direction and a same direction of at least the other of the first and second rotation blades.

According to another embodiment of the invention there is provided a separation device, further comprising at least one segregation device disposed on at least one of the first and second discharge openings for receiving at least one of the unburned carbon portion and the second portion of the first material after the processing.

According to another embodiment of the present invention there is provided a separation device comprising a casing that includes an inlet for receiving a first material containing at least an unburned carbon portion and a second portion, first means disposed in the casing for separating the first material into the unburned carbon portion and the second portion, the first means including second means for reducing in size the unburned carbon portion into a first reduced-size portion and the second portion into a second reduced-size portion, segregation means for receiving the first and second reduced-size portions from the casing and segregating the first reduced-size portion from the second reduced-size portion for later use, whereby the separation device operates economically and effectively, at least one of the first means, second means and segregation means being adjustable according to at least one of a size, density and unburned carbon content of the first material, whereby the separation device operates economically and accommodates material variation to the first material, and means for operating the separation device to separate and segregate the unburned carbon particles from the second particles.

According to another embodiment of the present invention, there is provided a separation device, further comprising the steps of forming a pulverization chamber between the casing and first and second rotation blades that are disposed on opposing sides of the pulverization chamber along a common rotational centerline, rotating at least one of the first and second rotation blades about the common rotational centerline sufficiently to create colliding vortices within the pulverization chamber, supplying the first material as particles into the casing at the inlet and the unburned carbon portion having a first specific gravity lower than a second specific gravity of the second portion, separating the first material into the unburned carbon portion and the second portion through at least one of a first process of self-collision with other first material particles and a second process of equipment-collision with the casing and the first and second rotation blades, reducing in size the unburned carbon portion and the second portion through repetition of at least one of the processes, and segregating the reduced-in-size, unburned carbon portion from the reduced-in-size second portion, whereby the separating method operates effectively with increased speed and efficiency.

According to another embodiment of the present invention, there is provided a pulverizer for pulverizing an effluent from a furnace comprising means for urging the effluent through the pulverizer, at least first and second blades disposed in the pulverizer, and means for rotating the first and second blades at a separation, in a direction, and at a speed effective to form a plurality of vortices which cause multiple collisions of particles of the effluent, whereby the particles are separated and reduced in size.

The above and other objects, features and advantages of the present invention will become apparent from the following description read in conjunction with the accompanying drawings, in which:
Figure 1 is a cross section showing a schematic construction of a first embodiment of the carbon separation device according to the present invention,
Figure 2 is a cross section showing a schematic construction of a second embodiment of the carbon separation device according to the present invention,
Figure 3 is a cross section showing the schematic construction of a third embodiment of the carbon separation device according to the present invention, and
Figure 4 is a schematic view illustrating a conventional boiler of a coal-fired power plant.

The present invention will now be described in detail with reference to the accompanying drawings.

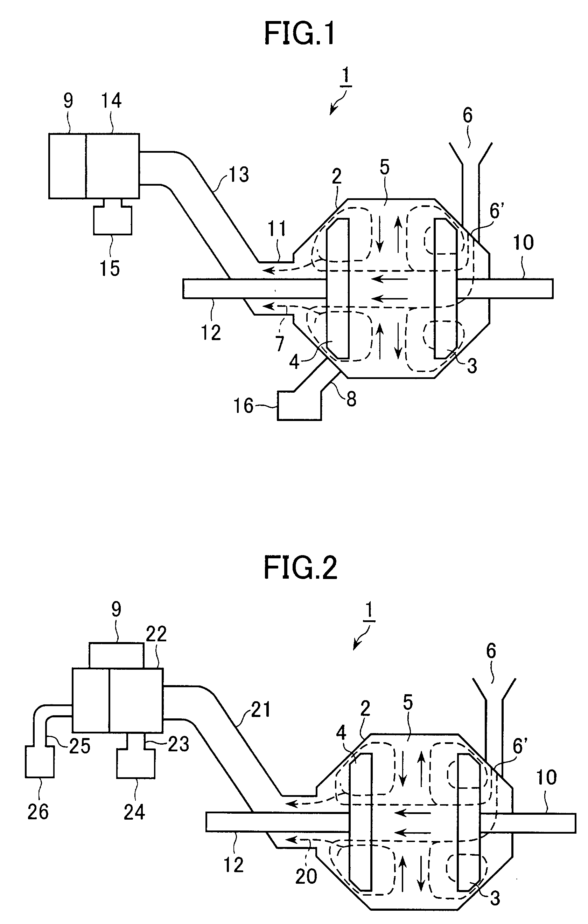

Referring now to Figure 1, a carbon separation device 1 includes a casing 2, a first rotation blade 3 and a second rotation blade 4. The first and second rotation blades 3 and 4 are inside the casing 2 at positions opposite each other along the same axis of rotation. It is to be understood that the first and second rotation blades 3 and 4 are each rotationally adjustable and operated by a rotation drive source or a motor (not shown).

A pulverization chamber 5 is defined as a space bounded by the first and second rotation blades 3 and 4 and the inner wall of the casing 2. An inlet opening 6 for supplying untreated fly ash to the casing 2 is connected to the casing 2 on the side adjacent to the first rotation blade 3. A first discharge opening 7 is on the casing 2 on the side adjacent to the rotation center axis of the second rotation blade 4. A second discharge opening 8 is at a position adjacent to the outer perimeter of the second rotation blade 4. A connecting passage 13 connects a suction device 9 having variable suction force to the first discharge opening 7.

The casing 2 has a substantially uniform inner diameter at its center in the longitudinal direction and right and left corners each having corresponding sloped-shapes. As a result, the casing 2 may be viewed as a tubular member having both ends closed and the inner diameter reduced gradually toward each side.

A first bearing (not shown) is disposed at the center of the right side of the casing 2 for rotatably supporting thereon a first support shaft 10 of the first rotation blade 3. Near the center of the left side of the casing 2, an extension pipe 11 extends axially outward and forms the first discharge opening 7.

A second bearing (not shown) is disposed at the end or outside of the extension pipe 11 for rotatably supporting thereon a second support shaft 12 of the second rotation blade 4.

In the sloping portion of the casing 2 outward of the first rotation blade 3, an opening 6' is formed to communicate with the inlet opening 6. A second discharge opening 8 is formed in the sloping portion of the casing 2 facing the tip of the second rotation blade 4. It is to be understood that the rotation speed of each of the rotation blades 3 and 4 is appropriately variable during processing between 5000 rpm and 10000 rpm, for example.

One end of the extension pipe 11 connects with one end of the connection passage 13. The other end of the connection passage 13 connects with the suction device 9. A removal mechanism 14 is disposed on the upstream side of the suction device 9. It is to be understood that the removal mechanism 14 may operate to capture and remove unburned carbon from the airflow by a filter or other process. A carbon storage part 15 is disposed at the exit of the removal mechanism 14. The carbon storage part 15 operates to store separated and removed unburned carbon after processing. It is to be understood that the suction force of the suction device 9 is designed to be adjustable and variable appropriately depending on the properties of the fly ash to provide smooth operation.

A fly ash storage part 16 which stores treated fly ash is connected to the carbon separation device 1 at the second discharge opening 8.

In one embodiment, the first rotation blade 3 includes four blade members (not shown) radially attached to a boss fixed to the end of the first support shaft 10. Each blade member is arranged at an equal spacing around the circumference of the boss. It is to be understood that the actual number, shape, and type of the blade members may be adapted for optimal efficiency. It should be also understood that a wide space between the adjacent blade members provides preferable airflow.

Similar to the first rotation blade 3, the second rotation blade 4 may have four blade members radially attached to a boss fastened to the end of the second support shaft 12.

In the present embodiment, the first and second support shafts 10 and 12 are adjustable in the axial direction for optimal efficiency. An interval or distance between the rotation blades 3 and 4 also defined as the width of the pulverization chamber 5 is therefore adjustable. Depending on the properties of the input fly ash to be treated, an optimal interval is achievable through adjustment of either one or both of the first and second support shafts 10 and 12. It should also be understood that the width of the pulverization chamber 5 is adjustable by either one or both of the support shafts.

In another embodiment, the casing 2 is constructed so that it can be split at the center for simple maintenance and inspection. During operation, the first and second rotation blades 3 and 4 rotate while the suction device 9 operates. The rotation of the rotation blades 3 and 4 and operation of the suction device 9 each create desirable air vortices within the casing 2 and pulverization chamber 5 which act to assist processing and transfer of the particles introduced into the casing 2. It is to be understood that inside the casing 2 and pulverization chamber 5, the circulation paths (in other words the circulation airflow) of the first and second rotation blades 3 and 4 each have velocity components. The directions of these velocity components may be the same as or opposite to each other. As a result, of these velocity components, particles added to the respective circulation paths collide with each other.

During operation, untreated fly ash particles are introduced into the inlet opening 6, and enter one side of the casing 2 through the opening 6'. The fly ash particles approach the first rotation blade 3 and pass through the spaces between the blade members on the first rotation blade 3. A portion of the particles ride on the airflow generated by the rotation of the blade members and circulates around and through the first rotation blade 3.

Through the action of both the blade members and the suction device 9, an additional portion of the particles are pulled toward the second rotation blade 4 and similarly circulate around the second rotation blade 4. During the circulation, the particles collide primarily with each other and also with various equipment pieces. During each collision, a shearing stress results. The collision shear stress to each particle is sufficient to pulverize the particles.

It should be understood that since silicon oxide particles and aluminum oxide particles are extremely hard, even if they collide with each other, generally only the aggregates are separated and complete pulverization is difficult. However, untreated fly ash is a mixture of particles of silicon oxide, aluminum oxide and untreated carbon. The unburned carbon is softer than either silicon oxide or aluminum oxide and is more easily sheared.

During operation, where particles of silicon oxide or aluminum oxide (or both aggregated) collide with unburned carbon particles, the unburned carbon particles break down. Each collision easily pulverizes the unburned carbon particles into ever-finer particles. During operation, the untreated fly ash circulates in the multiple circulation paths riding on the flowing air, and multiple collisions occur. During operation, repeated pulverization into micron or submicron is selectively conducted on the unburned carbon, and the unburned carbon gradually reaches a finer and finer particle size.

It should be understood that even when the carbon and other particles have the same size, silicon oxide and aluminum oxide particles have a greater specific gravity (density) compared to the particles of unburned carbon. As a result, when circulating in the various circulation paths, especially when flowing outward along the radial direction of each of the rotation blade 3 and 4, the particles of silicon oxide and aluminum oxide flow outward with a larger centrifugal force than the unburned carbon particles. As a result of these properties, the unburned carbon particles are more easily suctioned along the rotation center axis of the second rotation blade 4 and are easily discharged from the first discharge opening 7.

Since silicon oxide and aluminum oxide have a larger mass and a heavier specific gravity, they flow more easily outward in the radial direction of the circulation path of the second rotation blade 4. It should be understood that since carbon particles are relatively light and fly ash particles are relatively heavy, during operation and circulation in the circulation paths, the aggregated particle masses are dispersed and become pulverized into spherical particles, and due to differences in the centrifugal force acting on each particle, the direction of flow is different, and simplified separation is possible.

During operation, therefore, the particles of fly ash having relatively large mass and heavy specific gravity are easily processed into the second discharge opening 8 that is opened facing the tip of the second rotation blade 4. During prolonged operation, particles of fly ash are gradually stored inside the fly ash storage part 16 for later removal. In an alternative embodiment, an additional suction device may operate on the fly ash storage part 16, and particles of fly ash can be gradually led into the fly ash storage part 16 through both operational processing and influence from the vacuum.

During operation, particles of fly ash are gradually collected, and the unburned carbon particles are suctioned from the first discharge opening 7 and discharged outside of the casing 2 for storage in the carbon storage part 15 via the removal mechanism 14. In this manner, the fly ash stored in the fly ash storage part 16 has a low content of unburned carbon. The fly ash particles that were previously aggregated are now dispersed and become generally spherical, and high-quality fly ash is achieved. The high-quality fly ash is more desirable for later recycling and economic use.

The device and method described above allow easy manipulation of several process controls adaptable to produce a desired result. The adjustable process controls include changing the rotation speeds and directions of the first and second rotation blades 3 and 4, changing the input amount, changing the suction force of the suction device 9, and changing the pulverization or processing time. Through manipulation of these process controls, the unburned carbon processing is adaptable to different types of fly ash.

It should be understood that the process is adaptable to the operation of the first and second rotation blades 3 and 4 rotating in either the same or opposite directions as occasion demands. Operation in the same direction still results in multiple collisions. However, by reversing the rotation directions of each blade, shearing stress is increased, not only in the radial direction of each rotation blade but also along the counter-rotation direction. As a result, the pulverization efficiency is improved.

Referring now to Figure 2 showing another embodiment, the carbon separation device 1 includes a discharge opening 20 at the center portion of the casing 2 along the side of the second rotation blade 4. A connection passage 21 connects the suction device 9 to the discharge opening 20. A classification device 22 classifies the fly ash discharged from the discharge opening 20. A carbon storage part 24 is disposed on a first removal opening 23 of the classification device 22. A fly ash storage part 26 is disposed on a second removal opening 25.

During operation of the carbon separation device 1 in this embodiment, the first and second rotation blades 3 and 4 rotate while the suction device 9 and classification device 22 operate.

Fly ash is introduced into the inlet opening 6 and enters the casing 2 through the opening 6' to the right side of the casing 2. the fly ash then passes through the blade members of the first rotation blade 3 and a portion of the particles ride on the airflow generated by the rotation of the blade members and circulate around the first rotation blade 3. Another portion of the particles passes to the second rotation blade 4 and similarly circulate around the second rotation blade 4.

During normal operation, the circulation paths of the first and second rotation blades 3 and 4 inside the pulverization chamber 5 are opposed. Since the velocity components of each blade are in opposite directions, the particles in each of the circulation paths collide with each other, receive a shearing stress, and are pulverized. The first and second rotation blades 3 and 4 may also rotate in the same direction depending upon processing demand.

As described above, the fly ash which is now processed and pulverized to a micron and submicron level is suctioned from the discharge opening 20 and is discharged to the outside of the casing 2 along the connecting passage 21. The discharged fly ash is not completely but primarily sucked to the suction device 9. In alternative embodiments, gravity discharge may be used.

The discharged fly ash includes a mixture of silicon oxide particles, aluminum oxide particles and unburned carbon particles. This mixture is supplied to the classification device 22 for classification according to at least size but also possible chemical content, mass and other factors.

It is noted again that the particles of fly ash have a heavier specific gravity (greater mass) than the unburned carbon particles. As a result, fly ash has the property of flowing outward with a greater centrifugal force than the unburned carbon particles. The particles of unburned carbon having a lower mass can be separated from the fly ash particles by mass or other means. Fly ash particles having a heavier specific gravity are stored in the fly ash storage part 26. Unburned carbon particles having a lighter specific gravity are stored in the carbon storage part 24.

Due to the segregation described above, the fly ash stored in the fly ash storage part 26 has a lower content of unburned carbon than non-processed fly ash. The aggregated particles are dispersed and pulverized into generally spherical particles. The resulting processed fly ash has an increased economic viability.

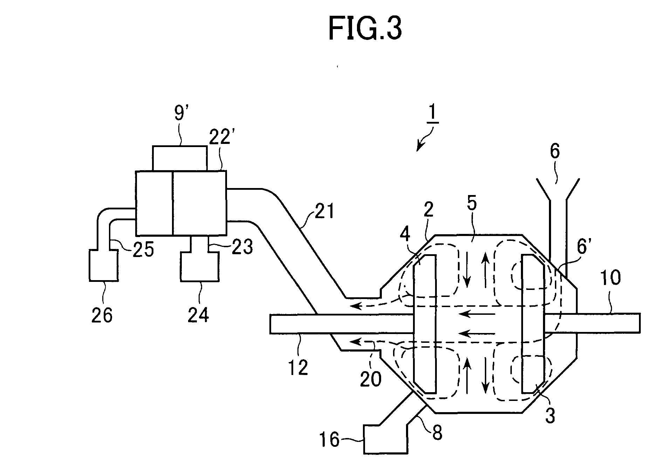

Referring now to Figure 3 showing the third embodiment of the present invention, the carbon separation device 1 comprises the second embodiment carbon separation device equipped with the fly ash storage part 16 and second discharge opening 8 of the first embodiment. The discharge opening 20 is opened at the center of the casing 2 on the side of the second rotation blade 4. The discharge opening 20 communicates with the classification device 22' that communicates with the suction device 9'. The suction device 9' operates to draw air through the carbon separation device 1. The classification device 22' conducts a graduated classification of the fly ash discharged from the discharge opening 20 using mass difference and specific gravity difference of the particles.

The first and second rotation blades 3 and 4, fly ash storage part 16, suction device 9', classification device 22' and other elements shown in Figure 3 have a similar construction as in each of the first and second embodiments.

Using the device of this embodiment, untreated fly ash is pulverized to the micron or submicron level. Most of the processed fly ash with a large specific gravity is collected from the second discharge opening 8 into the fly ash storage part 16. However, even where fly ash is discharged through the discharge opening 20 together with unburned carbon that has not been collected from the second discharge opening 8, the unburned carbon is separated and collected by the classification device 22'. As a result, the combined segregation process of this embodiment improves fly ash collection efficiency.

As described in the present invention, the second discharge opening 8 for removing fly ash particles is disposed on the casing 2 at a position along an extension line from the tip of the second rotation blade 4. It is to be understood that the second discharge opening 8 need only be disposed at a position that is farther from the rotation center of the rotation blade than the first discharge opening 7 of the first embodiment or the discharge opening 20 of the second embodiment. For example, the second discharge opening 8 can be disposed at a shoulder of the casing 2 where circulation airflow is likely for and advantageous to collection.

It should be understood that using the device and method described above, fly ash with a high unburned carbon content can be simply and cheaply reduced to fly ash with a low unburned carbon content. This advantage provides an increased application of fly ash as a raw material for second resources, reduces landfill waste and reduces disposal and raw material costs.

Using the present invention, a stable supply and quality of fly ash can be provided and alternative technologies can be more simply developed. For example, when treated and processed fly ash is used as a concrete admixture, the fluidity of the concrete is improved. With this improved raw material, applications with concrete admixtures can be expanded. Since the processed fly ash particles are pulverized and dispersed as spherical primary particles, the rheological bearing effect is heightened, and as a result, the fluidity of the concrete is desirably heightened.

As an additional benefit, untreated carbon particles can be selectively and very finely pulverized from the untreated fly ash. Since the pulverization is due to circulating airflow and vortices, pulverization can be conducted to the submicron level, as demanded by customers using the process variables. As another benefit, using the classification process of the present invention, trace elements contained in the fly ash can be separated and reduced at the same time as the reduction in the unburned carbon.

Some trace elements are toxic. The separation and reduction of toxic substances, which can become the source for environmental contamination, is a benefit. By achieving a reduction in toxic substances, possible applications of fly ash as a raw material may be further expanded.

It is to be understood as an additional benefit that since the present invention employs gaseous pulverization, particles in circulation paths with opposing velocity components collide and create a shearing stress primarily on each other, thus reducing equipment abrasion and reducing costs.

The carbon particles and silicon particles are separated with a classification device using differences in mass and differences in specific gravity. As a result, customers have increased raw material selection depending on size and specific gravity, and design freedom is increased.

Since classification performance and pulverization performance are individually adjustable, design freedom is further increased.

Since the process variables include those listed above, pulverization conditions can be optimized according to the properties of the untreated fly ash, and unburned carbon can be efficiently separated with desired variable particle size distributions.

It is to be understood that the phrase pulverization as used in the disclosed means breaks aggregated particles apart and also into smaller sizes through primarily self-collision during processing. It is to be understood that where equipment-collision occurs, it will be a minor portion when referenced to the primary self-collision portion.

It is to be understood that the pulverization method and conditions described above are methods to reduce the size of the untreated fly ash. The reduction method includes ways to reduce both the size of the processed fly ash and the size of the unburned carbon, as is desired by customers.

It should be understood that the suction device acts as one type of urging device to promote movement of material into the pulverization chamber, but other types of urging devices including adaptive utilization of gravity are usable.

Although only a single or a few exemplary embodiments of this invention have been described in detail above, those skilled in the art will readily appreciate that many modifications are possible in the exemplary embodiment(s) without materially departing from the novel teachings and advantages of this invention. Accordingly, all such modifications are intended to be included within the scope of this invention as defined in the following claims. In the claims, means-plus-function clauses are intended to cover the structures described or suggested herein as performing the recited function and not only structural equivalents but also equivalent structures.

Having described preferred embodiments of the invention with reference to the accompanying drawings, it is to be understood that the invention is not limited to those precise embodiments and that various changes and modifications may be effected therein by one skilled in the art without departing from the scope or spirit of the invention as defined in the appended claims.

## Claims

1. A separation device comprising:
a casing that includes an inlet for receiving a first material containing at least an unburned carbon portion and a second portion;
first means disposed in said casing for separating said first material into said unburned carbon portion and said second portion, said first means including second means for reducing in size said unburned carbon portion into a first reduced-size portion and said second portion into a second reduced-size portion; and
segregation means for receiving said first reduced-size portion and said second reduced-size portion from said casing and segregating said first reduced-size portion from said second reduced-size portion for later use;
whereby said separation device operates economically and effectively.

2. A separation device according to claim 1, wherein at least one of said first means, second means and segregation means is adjustable according to at least one of a size, density and unburned carbon content of said first material, whereby said separation device operates economically and accommodates material variation to said first material.

3. A separation device according to claim 2, further comprising:
a first rotation blade disposed in said first means and having a first rotation axis;
a second rotation blade disposed in said first means and having a second rotation axis, said second rotation blade opposing said first rotation blade in said casing along a common axis of rotation; and
a pulverization chamber defined between said casing and said first and second rotation blades.

4. A separation device according to claim 3, wherein said pulverization chamber includes a first width defined as a separation between said first and second rotation blades; and said first width is adjustable according to at least said size, density and unburned carbon content of said first material, whereby said separation device is adaptable according to variations in said first material.

5. A separation device according to claim 4, wherein said first rotation blade includes a blade quantity and a first shape adapted to an inside surface of said casing; said second rotation blade includes a blade quantity and a second shape adapted to said inside surface of said casing; at least one of said first and second rotation blades is rotationally operable in at least one of an opposite direction and a same direction of at least the other of said first and second rotation blades; and said first and second rotation blades are rotationally operable according to said inside surface to create within said casing circulating vortices sufficient to cause said separation and said reduction in size of said first material by fracture impact and shear stress.

6. A separation device according to claim 5, further comprising:
a suction device; and
a connecting channel that connects said suction device to said casing;
said suction device drawing a gas containing said first material into said inlet, over said first rotation blade, into said pulverization chamber, and over said second rotation blade to said segregation means to assist said vortices to transport said first material into said separation device for processing.

7. A separation device according to claim 6, further comprising:
at least one of a first outlet opening and a second outlet opening formed in said casing for receiving said first and second reduced-size portions from said casing and transferring said first and second reduced-size portions to said segregation means.

8. A separation device according to claim 7, further comprising:
a first storage part formed in said segregation means for receiving and segregating said first reduced-size portion depending upon a particle size and a mass of said first reduced-size portion; and
a second storage part formed in said segregation means for receiving and segregating said second reduced-size portion depending upon a particle size and a mass of said second reduced-size portion, whereby said separation device provides easy separation of said unburned carbon from said second portion.

9. A separation device according to claim 8, wherein said first outlet opening is disposed at a first position on said casing adjacent to said first rotation axis for receiving said first reduced-size portion; and said second outlet opening is disposed at a second position on said casing adjacent to an outer circumference of said second rotation blade for receiving said second reduced-size portion; whereby segregation of particle size and mass is simplified.

10. A separation device according to claim 9, wherein said first inlet opening is disposed at a third position on said casing adjacent to an outer circumference of said first rotation blade.

11. A separation device according to claim 10, further comprising:
a classification device in said segregation means; and
wherein said connecting channel connects said classification device to said casing; and said classification device receives discharged particles of said first and second reduced-size portions and uses differences in mass and density of said discharged particles to classify them for later use.

12. A method for separating unburned carbon in a first material containing both an unburned carbon portion and a second portion, comprising the steps of:
disposing a first rotation blade and a second rotation blade on opposing sides of a pulverization chamber along a common rotational centerline;
rotating at least one of said first and second rotation blades about said common rotational centerline at at least one of a speed and a separation sufficient to create colliding vortices within said pulverization chamber;
supplying said first material as particles into a bounding casing from a first position on said bounding casing and said unburned carbon portion having a first specific gravity lower than a second specific gravity of said second portion;
separating said first material into said unburned carbon portion and said second portion through at least one of a first process of self-collision with other first material particles and a second process of equipment-collision with said bounding casing and said first and second rotation blades;
reducing in size said unburned carbon portion and said second portion through repetition of said at least one of said first and second processes; and
segregating said reduced-in-size unburned carbon portion from said reduced-in-size second portion, whereby said method operates effectively with increased speed and efficiency.

13. A method for separating according to claim 12, further comprising the steps of:
receiving said reduced-in-size, segregated, unburned carbon portion in a first discharge opening on said bounding casing; and
receiving said reduced-in-size, segregated second portion in a second discharge opening on said bounding casing, whereby said first material is efficiently and simply pulverized, reduced in size and segregated for later use.

14. A method for separating according to claim 13, wherein said first position on said bounding casing surface is adjacent to an outer circumference of said first rotation blade, and said first discharge opening is adjacent to a rotation center axis of said second rotation blade, whereby said unburned carbon particles having lower centrifugal force than said second portion are easier to separate; and said second discharge opening on said casing is adjacent to an outer perimeter portion of said second rotation blade, where said second portion having a higher centrifugal force than said unburned carbon portion is easier to separate.

15. A method for separating unburned carbon in a first material containing both an unburned carbon portion and a second portion, comprising the steps of:
supplying said first material in particulate form to a pulverization chamber in which a first rotation blade and a second rotation blade are disposed in an opposing manner along a single rotational axis on a first side adjacent to said first rotation blade;
rotating at least one of said first and second rotation blades along said single rotational axis to provide colliding air vortices within said pulverization chamber;
colliding particles of said first material on said colliding air vortices with each other to separate said unburned carbon portion from said second portion;
pulverizing said unburned carbon portion and said second portion by repeated collision;
segregating said separated, pulverized, unburned carbon portion and said second portion according to centrifugal force resulting from differences in mass; and
separately capturing the now segregated, pulverized, unburned carbon portion and second portion to allow for later convenient use and discard.

16. A separation device, comprising:
a casing that includes an inlet for receiving a first material containing at least an unburned carbon portion into said casing;
first means disposed in said casing for separating said first material into said unburned carbon portion and a second portion, said first means including second means for reducing in size said unburned carbon portion into a first reduced-size portion and said second portion into a second reduced-size portion;
segregation means for receiving said first and second reduced-size portions from said casing and segregating said first reduced-size portion from said second reduced-size portion for later use, whereby said separation device operates economically and effectively;
at least one of said first means, second means and segregation means being adjustable according to at least one of a size, density and unburned carbon content of said first material, whereby said separation device operates economically and accommodates material variation to said first material;
a first rotation blade disposed in said first means and having a first rotation axis;
a second rotation blade disposed in said first means and having a second rotation axis, said second rotation blade opposing said first rotation blade in said casing along a common axis of rotation;
a pulverization chamber defined between said casing and said first and second rotation blades, said pulverization chamber including a first width defined as a separation between said first and second rotation blades;
said first width being adjustable according to at least said size, density and unburned carbon content of said first material, whereby said separation device is adaptable according to variations in said first material;
said first rotation blade including a blade quantity and a first shape adapted to an inside surface of said casing;
said second rotation blade including a blade quantity and a second shape adapted to said inside surface of said casing;
at least one of said first and second rotation blades being rotationally operable in at least one of an opposite direction and a same direction of the other of said first and second rotation blades;
said first and second rotation blades being rotationally operable according to said inside surface to create within said casing circulating vortices sufficient to cause said separation and said reduction in size of said first material by fracture impact and shear stress;
a suction device;
a connecting channel that connects said suction device to said casing;
said suction device drawing gas into said inlet, over said first rotation blade, into said pulverization chamber, and over said second rotation blade to said segregation means to assist said vortices to transport said first material into said separation device for processing;
at least one of a first outlet opening and a second outlet opening formed in said casing for receiving said first reduced-size portion and said second reduced-size portion from said casing and transferring said first reduced-size portion and said second reduced-size portion to said segregation means;
a first storage part formed in said segregation means; and
a second storage part formed in said segregation means.

17. A separation device, comprising:
a casing;
a first rotation blade and a second rotation blade disposed face to face inside said casing for operating about a common rotational axis;
a pulverization chamber defined as a space bounded by said first and second rotation blades and said casing;
an inlet opening formed in said casing adjacent to said first rotational blade and having a shape for receiving a particulate first material containing at least an unburned carbon portion and a second portion;
at least one of a first discharge opening and a second discharge opening formed in said casing adjacent to said second rotational blade, said first discharge opening having a position adjacent to said common rotational axis of said second rotational blade and said second discharge opening having a position adjacent to an outer circumference of said second rotation blade; and
a suction device connected to said casing opposite said first discharge opening for operating to draw said first particulate material into said casing.

18. A separation device according to claim 17, wherein at least one of said first and second rotation blades is rotationally operable in at least one of an opposite direction and a same direction of at least the other of said first and second rotation blades.

19. A separation device according to claim 18, further comprising:
at least one segregation device disposed on at least one of said first and second discharge openings for receiving at least one of said unburned carbon portion and said second portion of said first material after processing.

20. A separation device, comprising:
a casing that includes an inlet for receiving a first material containing at least an unburned carbon portion and a second portion;
first means disposed in said casing for separating said first material into said unburned carbon portion and said second portion, said first means including second means for reducing in size said unburned carbon portion into a first reduced-size portion and said second portion into a second reduced-size portion;
segregation means for receiving said first and second reduced-size portions from said casing and segregating said first reduced-size portion from said second reduced-size portion for later use, whereby said separation device operates economically and effectively;
at least one of said first means, second means and segregation means being adjustable according to at least one of a size, density and unburned carbon content of said first material, whereby said separation device operates economically and accommodates material variation to said first material; and
means for operating said separation device to separate and segregate said unburned carbon particles from said second particles.

21. A separation device according to claim 20, further comprising the steps of
forming a pulverization chamber between said casing and first and second rotation blades that are disposed on opposing sides of said pulverization chamber along a common rotational centerline;
rotating at least one of said first and second rotation blades about said common rotational centerline sufficiently to create colliding vortices within said pulverization chamber;
supplying said first material as particles into said casing at said inlet and said unburned carbon portion having a first specific gravity lower than a second specific gravity of said second portion;
separating said first material into said unburned carbon portion and said second portion through at least one of a first process of self-collision with other first material particles and a second process of equipment-collision with said casing and said first and second rotation blades;
reducing in size said unburned carbon portion and said second portion through repetition of at least one of said processes; and
segregating said reduced-in-size, unburned carbon portion from said reduced-in-size second portion, whereby said method for separating operates effectively with increased speed and efficiency.

22. A pulverizer for pulverizing an effluent from a furnace comprising:
means for urging said effluent through said pulverizer;
at least first and second blades disposed in said pulverizer; and
means for rotating said first and second blades at a separation, in a direction, and at a speed effective to form a plurality of vortices which cause multiple collisions of particles of said effluent, whereby said particles are separated and reduced in size.
